Europäisches Patentamt

European Patent Office

Office européen des brevets

(19)

(11) Publication number: **0 007 742**
**B1**

(12) **EUROPEAN PATENT SPECIFICATION**

(45) Date of publication of patent specification: **17.08.83**

(51) Int. Cl.³: **B 65 G  47/10**

(21) Application number: **79301361.6**

(22) Date of filing: **11.07.79**

(54) Article consolidation apparatus.

(30) Priority: **11.07.78 US  923653**

(43) Date of publication of application:
**06.02.80 Bulletin 80/3**

(45) Publication of the grant of the patent:
**17.08.83 Bulletin 83/33**

(84) Designated Contracting States:
**DE FR GB SE**

(56) References cited:
**FR - A - 1 427 294**
**FR - A - 2 324 541**
**GB - A - 1 471 137**
**US - A - 3 670 867**
**US - A - 3 734 311**
**US - A - 3 780 852**
**US - A - 4 088 237**

(73) Proprietor: **SPS TECHNOLOGIES, INC.**
**The Benson East**
**Jenkintown Pennsylvania 19046 (US)**

(72) Inventor: **Bernard, Clay**
**7794 S. Indianapolis**
**Tulsa, Oklahoma 74136 (US)**
Inventor: **Angell, William M.**
**9704 S. Lakewood**
**Tulsa, Oklahoma 74136 (US)**
Inventor: **Matheny, William Forbes**
**1722 E. 56th Street**
**Tulsa, Oklahoma 74105 (US)**

(74) Representative: **MacGregor, Gordon et al,**
**ERIC POTTER & CLARKSON 14 Oxford Street**
**Nottingham, NG1 5BP (GB)**

Courier Press, Leamington Spa, England.

## Article consolidation apparatus

This invention relates to an apparatus for consolidation of small parts and the like.

Such consolidation apparatus is used to assemble orders in wholesale and retail applications and may be used to assemble kits in manufacturing applications. The usual consolidation apparatus comprises solid storage shelves whereby an operator must go to the shelf to pick the desired inventory items.

An article storage and retrieval apparatus is disclosed in U.S. Patent Specification No. 3,780,852 in which an oval track is provided around which there is movable an array of storage compartments spaced horizontally and vertically. The apparatus is intended for supplying parts sequentially for use in constructing an article, the parts being arranged sequentially in the compartments.

The present invention is concerned with stocking an apparatus of this type and facilitates assemblage of parts in respective compartments, e.g. in preparation of an order or a kit of parts, at a work station by automatically moving the compartments relative to the station and indicating the compartment to receive a preselected part.

In accordance with this invention, there is provided a consolidation apparatus for use in consolidating preselected articles into predetermined combination of articles, the apparatus comprising continuous article storage means movable horizontally around a continuous path, the article storage means including horizontally spaced baskets each having vertically spaced compartments, and an operator work station adjacent to and outside the path of the article storage means, characterised by control means for controlling positioning of the article storage means relative to the work station to align a preselected basket with the work station, pulse generating means for feeding the pulses to the control means as the article storage means is moved around its path, position referencing means for feeding a signal to the control means when the article storage means is in a predetermined position, and indicating means operated by the control means to indicate a predetermined compartment of the aligned basket at the work station.

Reference is now made to the accompanying drawings wherein:—

Figure 1 is a flow-chart diagram of the operation of a consolidation apparatus constructed in accordance with one embodiment of the present invention;

Figure 2 is a flow-chart diagram of the operation of a carousel forming a part of the consolidation apparatus shown in Figure 1;

Figure 3 is a top view of a pulse generator associated with the carousel shown in Figure 2;

Figure 4 is a diagrammatic view of the consolidation apparatus with article feeding apparatus;

Figure 5 is a side view of the apparatus shown in Figure 4; and

Figure 6 is a flow-chart diagram of a storage and retrieval system utilizing the apparatus of Figures 4 or 5.

Referring to the drawings there is shown consolidation apparatus 10 (Figures 4, 5 and 6) for consolidation of parts and the like. The apparatus 10 could be utilized for such articles as car parts, aircraft parts and computer parts and could be used in retail, wholesale and manufacturing applications. The apparatus could be used to consolidate parts for orders or for kits.

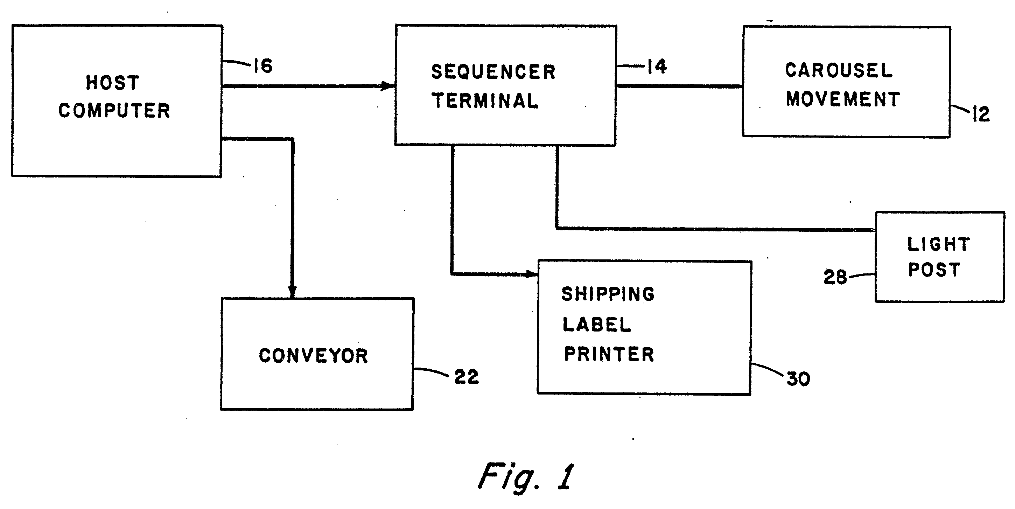

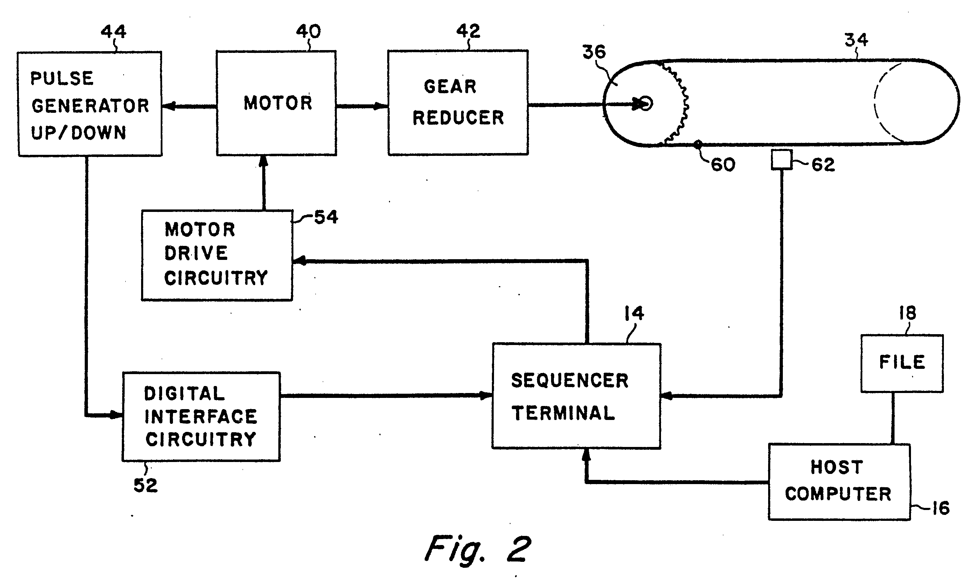

The consolidation apparatus includes a storage carousel 12 for article storage with related control means as best seen in the flowcharts of Figures 1 and 2. A sequencer terminal 14 is linked electronically to a host computer 16 which retains records or files 18 of an inventory and may be linked to other sequencer terminals. The sequencer terminal 14 might have digital controls and could be programmed by a terminal operator (not shown). The actual operation of such a terminal is well-known in computer art.

The sequencer terminal controls the movement of the storage carousel 12 and a light-post 28 having a series of individual indicator lights linked to the sequencer terminal 14 and located adjacent to the carousel 12 at the work station. A shipping label printer 30 located adjacent to the carousel is also linked to the sequencer terminal.

The host computer 16 controls supply of parts to the carousel or to move them one carousel if required.

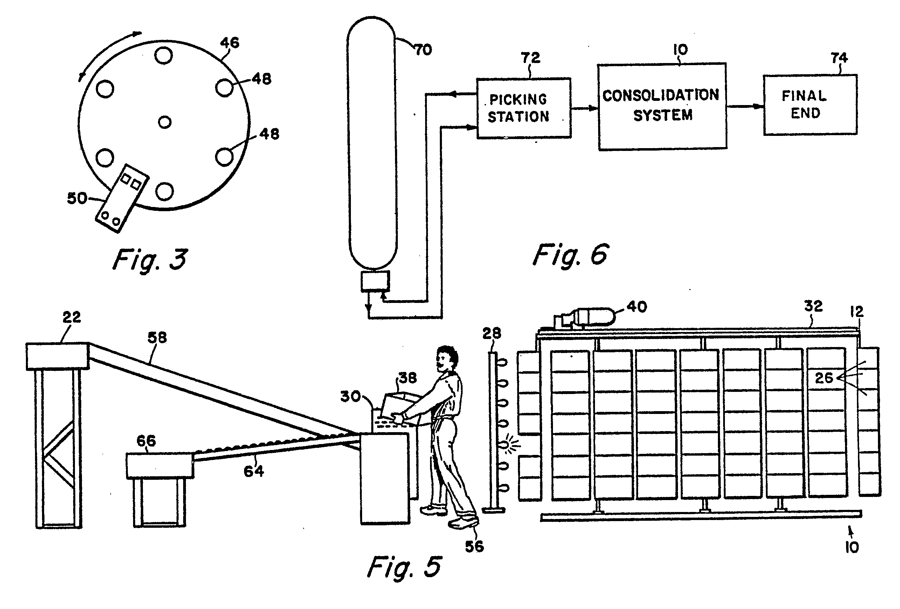

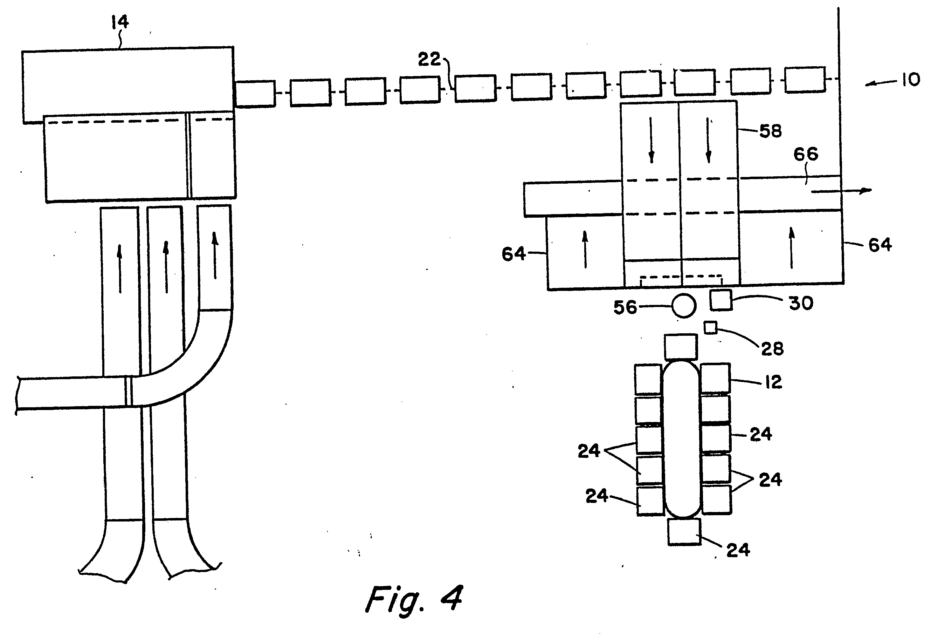

Referring to Figures 2 and 5, the carousel comprises a continuous oval-like track 32 which has a continuous chain 34 around the track. Compartmented baskets (not shown) are suspended from the chain, which is moved around the track by a drive sprocket 36.

The drive sprocket 36 is connected to a motor 40 through a gear reducer 42. The motor is connected to a pulse generator 44, the operation of which is best seen in Figure 3. The pulse generator includes a circular disc or plate 46 on which a series of magnets 48 is mounted. When the disc is rotated by operation of the motor 40, the magnets successively pass magnetic sensors 50, located at a fixed point, which are capable of detecting magnetic flux. Returning to a consideration of Figure 2, the sensors of the pulse generator 44 are linked to a digital interface circuitry 52 which deciphers the magnetic pulses from the generator 44. The interface circuitry 52 is connected to the sequencer terminal 14. The sequencer terminal is linked to the motor 40 through motor drive circuitry 54.

At a reference point on the chain 34, a home emitter 60 is mounted. At a stationary position adjacent the chain 34 a sensor 62 is located, which is linked to the sequencer terminal 14. Calculating the number of pulses emitted from the time the sensor first detects pulses until the time the sensor again detects pulses in one complete revolution, the total number of pulses in a revolution can be determined. The controller can utilize the home emitter to align a desired basket at the work station by allowing the baskets to move a predetermined amount. The chain can be moved in either direction.

Referring now to Figures 4 and 5 the work station is shown as a human operator 56 (indicated by a circle in Figure 4) stationed at a position adjacent the carousel 12, so the minimal operator movement is necessary. The carousel baskets 24 are illustrated and are spaced horizontally and provided with vertically spaced compartments 26. The baskets are parallel to each other and are lightweight in construction, consisting of wire caging for instance. Tote bins 38 rest in the various compartments 26 of the baskets 24.

Parts (not shown) travel on a pan conveyor 22 (controlled by the computer 16) past the sequencer terminal 14 where information on the parts is entered into the terminal by the terminal operator. The pan conveyor consists of a series of individual pans, each being a measured distance apart. From a fixed point the sequencer terminal directs the desired part or parts to travel a measured distance on the pan conveyor 22 and then slide from the pan conveyor. The desired part or parts would drop from the pan conveyor and slide down an inclined chute 58, as best seen in Figure 5 to a location adjacent the human operator 56. The pan conveyor and the inclined chute 58 comprise a means to selectively deliver preselected articles to the human operator.

At this point, the desired part or parts would be at the work station within reach of the human operator 56. The operator is stationed at a point that is also within reaching distance of the outside of the carousel 12. The part or parts are taken by the operator 56 and placed in the appropriate compartment on the appropriate basket 24. The appropriate compartment is indicated by one of the individual lights on the lightpost 28. It is important to note that minimal movement by the human operator is necessary.

While the parts are being brought by the pan conveyor 22 to the human operator, the sequencer terminal 14 would also be automatically directing the appropriate basket to align adjacent the operator 56. This is accomplished through use of digital positioning of the carousel 12.

Once the orders or kits have been consolidated by bringing all the desired parts together, the order or kit is ready to be sent from the consolidation system 10. The label printer 30 will deliver a receipt or ticket (not shown) to the human operator 56 who will place both the consolidated parts order and the receipt on inclined rollers 64 which are connected to an outgoing conveyor 66. The label printer can be made to deliver a detailed statement as to the number, description, cost and price of the parts

Figure 6 shows a flow-chart having an article consolidation system utilized in combination with a storage and retrieval system. Parts or the like are inserted and stored in a carousel 70 aligned adjacent to a picking station 72 containing an insertor and extractor mechanism. This extractor and insertor deliver parts to the consolidation system 10 described above. The completed orders or kits are then delivered to their final destination 74.

**Claims**

1. A consolidation apparatus for use in consolidating preselected articles into predetermined combinations of articles, the apparatus comprising continuous article storage means (12) movable horizontally around a continuous path, the article storage means including horizontally spaced baskets (24) each having vertically spaced compartments, and an operator work station (56) adjacent to and outside the path of the article storage means, characterised by control means (14, 16) for controlling positioning of the article storage means relative to the work station to align a preselected basket with the work station, pulse generating means (44) for feeding pulses to the control means as the article storage means is moved around its path, position referencing means (60, 62) for feeding a signal to the control means when the article storage means is in a predetermined position and indicating means (28) operated by the control means to indicate a predetermined compartment of the aligned basket at the work station.

2. A consolidation apparatus according to Claim 1, wherein the pulse generating means (44) comprises a disc (46) rotatable by a drive motor (40) for the article storage means a plurality of magnets (48) mounted on the disc and spaced therearound, and a stationary magnetic sensor (50) for detecting changes in magnetic flux as the disc rotates to produce said pulses.

3. A consolidation apparatus according to Claim 1 or 2, wherein the indicating means (28) comprises a vertical lightpost at the work station (56) having a light corresponding to each compartment level of the baskets (24),

4. A consolidation apparatus according to Claim 1, 2 or 3, including movable tote-bins insertable in the compartments for holding the articles.

5. A consolidation apparatus according to Claims 1, 2, 3 or 4, wherein the article storage means (12) includes a chain (34) from which the baskets (24) are suspended and the chain is driven by a sprocket (36) connected with a drive motor (40).

6. A consolidation apparatus according to Claim 5, wherein the position reference means (60, 62) comprises an emitter (60) mounted on the chain and a stationary sensor (62) coupled to the control means.

**Revendications**

1. Installation destinée à être utilisée pour rassembler des objets présélectionnés suivant des combinaisons prédéterminées, installation comportant des moyens (12) de stockage continu d'objets pouvant se déplacer horizontalement suivant un trajet continu, ces moyens de stockage d'objets comprenant des paniers (24) espacés horizontalement qui comportent chacun des compartiments espacés verticalement, ainsi qu'un poste de travail (56) pour un opérateur qui est situé à côté et à l'extérieur du trajet des moyens de stockage d'objets, caractérisée en ce qu'elle comporte des moyens de commande (14, 16) pour commander la position des moyens de stockage d'objets par rapport au poste de travail de manière à aligner un panier présélectionné avec le poste de travail, un générateur d'impulsions (44) pour appliquer des impulsions aux moyens de commande lorsque les moyens de stockage d'objets sont déplacés le long de leur trajet, des moyens de référence de position (60, 62) pour appliquer un signal aux moyens de commande lorsque les moyens de stockage d'objets se trouvent dans une position prédéterminée, et des moyens indicateurs (28) commandés par les moyens de commande pour indiquer un compartiment prédéterminé du panier aligné avec le poste de travail.

2. Installation suivant la revendication 1, caractérisée en ce que le générateur d'impulsions (44) comporte un disque (46) pouvant être entraîné en rotation par un moteur d'entraînement (40) des moyens de stockage des objets, plusieurs aimants (48) montés sur le disque et espacés suivant la périphérie de celui-ci, ainsi qu'un détecteur magnétique fixe (50) pour détecter les changements du flux magnétique lorsque le disque tourne, pour fournir lesdites impulsions.

3. Installation suivant la revendication 1 ou 2, caractérisée en ce que les moyens indicateurs (28) comportent un poteau vertical de signalisation lumineuse au niveau du poste de travail (56), avec une lampe qui correspond à chaque niveau de compartiment des paniers (24).

4. Installation suivant la revendication 1, 2 ou 3, caractérisée en ce qu'elle comporte des casiers de transport mobiles qui peuvent être insérés dans les compartiments pour retenir les objets.

5. Installation suivant les revendications 1, 2, 3 ou 4, caractérisée en ce que les moyens (12) de stockage d'objets comportent une chaîne (34) à laquelle sont suspendus des paniers (24) et qui est entraînée par une roue dentée (36) couplée au moteur d'entraînement (40).

6. Installation suivant la revendication 5, caractérisée en ce que les moyens de référence de position (60, 62) comportent un émetteur (60) monté sur la chaîne, et un détecteur fixe (62) couplé aux moyens de commande.

**Patentansprüche**

1. Zusammentragevorrichtung für die Verwendung zum Zusammentragen von vorgewählten Gegenständen zu vorbestimmten Kombinationen von Gegenständen, mit einer waagerecht um eine geschlossene Bahn herum bewegbaren, endlosen Speicheranordnung (12) für die Gegenstände, welche in waagerechten gegenseitigen Abständen angeordnete, jeweils senkrecht beabstandete Abteile aufweisende Körbe (24) aufweist, und mit einer nahe der Bahn der Speicheranordnung und außerhalb derselben angeordneten Arbeitsstation (56) für eine Bedienungsperson, gekennzeichnet durch eine Steuereinrichtung (14, 16) zum Steuern der Ausrichtung der Speicheranordnung relativ zur Arbeitsstation und zum Ausrichten jeweils eines vorgewählten Korbs auf die Arbeitsstation, duirch eine Impulsgeneratoranordnung (44) zum Speisen der Steuereinrichtung mit Impulsen bei der Bewegung der Speichereinrichtung un ihre Bahn herum, durch einen Bezugs-Stellungsgeber (60, 62) zum Speisen der Steuereinrichtung mit einem Signal, wenn sich die Speichereinrichtung in einer vorbestimmten Stellung befindet, und durch eine von der Steuereinrichtung betätigte Anzeigeeinrichtung (28) zum Anzeigen eines vorbestimmten Abteils des in der Arbeitsstation ausgerichteten Korbes.

2. Zusammentragevorrichtung nach Anspruch 1, dadurch gekennzeichnet, daß die Impulsgeneratoranordnung (44) eine von einem Antriebsmotor (40) für die Speichereinrichtung in Drehung versetzbare, eine Anzahl von in gegenseitigen Umfangsabständen darauf angeordneten Magneten (48) tragende Scheibe (46) und einen zur Erzeugung der Impulse auf Anderungen des Magnetflusses bei der Drehung der Scheibe ansprechenden, feststehenden Magnetsensor (50) aufweist.

3. Zusammentragevorrichtung nach Anspruch 1 oder 2, dadurch gekennzeichnet, daß die Anzeigeeinrichtung (28) eine an der Arbeitsstation (56) angeordnete, senkrechte Lichtsäule mit jeweils einem Licht in Höhe, jedes Abteils der Körbe (24) aufweist.

4. Zusammentragevorrichtung nach Anspruch 1, 2, oder 3, gekennzeichnet durch in die Abteile einsetzbare Transportbehälter für die Unterbringung der Gegenstände.

5. Zusammentragevorrichtung nach Anspruch 1, 2, 3 oder 4, dadurch gekennzeichnet, daß die Speichereinrichtung (12) eine Kette (34) aufweist, an welcher die Körbe (24) aufgehängt sind, und welche von einem mit einem Antriebsmotor (40) verbundenen Kettenrad (36) antreibbar ist.

6. Zusammentragevorrichtung nach Anspruch 5, dadurch gekennzeichnet, daß der Bezugs-Stellungsgeber (60, 62) einen an der Kette angebrachten Emitter (60) und einen mit der Steuereinrichtung verbundenen, stationären Sensor (62) aufweist.

*Fig. 1*

HOST COMPUTER

SEQUENCER TERMINAL —14

CAROUSEL MOVEMENT —12

CONVEYOR —22

SHIPPING LABEL PRINTER —30

28— LIGHT POST

16

0 007 742

Fig. 2

Fig. 3

Fig. 6

Fig. 5

Fig. 4

0 007 742